# EUROPÄISCHE PATENTSCHRIFT

(11) **EP 0 592 877 B1**
(45) Veröffentlichungstag und Bekanntmachung des Hinweises auf die Patenterteilung: **23.10.1996**
(21) Anmeldenummer: 93115789.5
(22) Anmeldetag: 30.09.1993
(51) Int. Cl.: B29C 47/92

(54) **Regeleinrichtung für die mechanische oder thermische Einstellung der Düse eines Extruders für Langprodukte**
Control device for the mechanical or thermal die adjustment in extruder for elongated products
Dispositif de contrôle pour le réglage mécanique ou thermique d'une filière d'extrudeuse pour des produits longs

(30) Priorität: 16.10.1992 DE 4234924
(43) Veröffentlichungstag der Anmeldung: 20.04.1994
(73) Patentinhaber: FRIEDRICH THEYSOHN GmbH, D-32547 Bad Oeynhausen (DE)
(72) Erfinder: Krüger, Ernst, Dr., D-49124 Georgsmarienhütte (DE); Klose, Reinhard, D-31737 Rinteln (DE)
(74) Vertreter: Cohausz & Florack

(56) Entgegenhaltungen:
- EP-A- 0 425 944
- PLASTVERARBEITER Bd. 43, Nr. 8, August 1992, SPEYER AM RHEIN Seiten 37-40 - 42-43 XP000305384 ERNST KRÜGER, ROLF DIEDERICHS, RIENHARD KLOSE 'Das Wie und Wo von Ultraschall bei der Automatisierung'
- PLASTVERARBEITER Bd. 34, Nr. 6, Juni 1983, SPEYER AM RHEIN Seite 541 'Mess- und Regelsystem für Breitschlitzextruder'

## Beschreibung

Die Erfindung bezieht sich auf eine Regeleinrichtung für die mechanische oder thermische Einstellung der Düse eines Extruders für Langprodukte mit einer Wanddickenmeßeinrichtung mit mindestens einem über die Breite beziehungsweise den Umfang des Langproduktes reversierenden beziehungsweise umlaufenden Ultraschallmeßkopf, aus dessen Meßwert die Regelgröße abgeleitet wird.

Derartige Regeleinrichtungen werden z.B. in der Zeitschrift "Plastverarbeiter Bd. 43, Nr 8, August 92, Speier am Rhein" beschrieben.

Aus Gründen eines geringen Materialeinsatzes ist man beim Extrudieren von Bändern oder Rohren bestrebt, die Wanddicke möglichst wenig oberhalb der Mindestwanddicke zu halten. Wanddickenschwankungen können sowohl über die Breite beziehungsweise den Umfang des Langproduktes als auch in Längsrichtung auftreten.

Für Dickenschwankungen in Längsrichtung ist charakteristisch, daß die Wanddicke in einzelnen senkrecht zur Achse des Langproduktes liegenden Ebenen über die Bandbreite beziehungsweise den Rohrumfang konstant ist. Solche Dickenschwankungen können verursacht sein durch Temperaturveränderungen im Produkt, Änderungen in der Drehzahl der Schnecke des Extruders oder durch eine Änderung der Abzugsgeschwindigkeit. Durch entsprechende Regeleingriffe lassen sich solche Dickenschwankungen in Längsrichtung ausregeln.

Unterschiedliche Wanddicken in Umfangsrichtung beziehungsweise über die Breite des Langproduktes können verschiedene Ursachen haben. Eine häufige Ursache ist die Geometrie der Düse des Extruders oder unterschiedliche Temperaturen des Produktes über die Breite beziehungsweise über den Umfang der Düse. Solche Wanddickenschwankungen können durch Regeleingriffe an der Düse ausgeglichen werden. Bekannt ist, dies entweder auf mechanische oder auf thermische Art und Weise zu tun.

Eine Schwierigkeit bei der Regelung der Wanddicke besteht deshalb darin, daß die Wanddicke sowohl von der Einstellung der Düse, der Temperatur des zu extrudierenden Materials, der Abzugsgeschwindigkeit und der Schneckendrehzahl beeinflußt wird. Dickenschwankungen in Umfangsrichtung sind von Dickenschwankungen in Längsrichtung überlagert. Das bedeutet, daß die Meßwerte des reversierenden beziehungsweise umlaufenden Ultraschallmeßkopfes nur bedingt als Regelgröße verwendbar sind.

Der Erfindung liegt die Aufgabe zugrunde, eine Regeleinrichtung für die mechanische und/oder thermische Einstellung der Düse eines Extruders zu schaffen, mit der Wanddickenschwankungen über die Breite beziehungsweise den Umfang des Langproduktes besser ausgeregelt werden können.

Diese Aufgabe wird erfindungsgemäß bei einer Regeleinrichtung der eingangs genannten Art durch mindestens einen weiteren, stationären Ultraschallmeßkopf gelöst, der seinen Meßwert an eine Auswerteeinheit liefert, die diesen Meßwert mit dem Meßwert des reversierenden beziehungsweise umlaufenden Meßkopfes derart verknüpft, daß die Auswerteeinheit ein von überlagerten Meßwerten des stationären Meßkopfes für ausschließliche Wanddickenschwankungen in Längsrichtung des Langproduktes freies Signal für die Regelung der Wanddicke in Umfangsrichtung bildet.

Bei der erfindungsgemäßen Regeleinrichtung wird der Trend von Wanddickenschwankungen in Längsrichtung über die Einbeziehung der Meßwerte des stationären Meßkopfes bei der Bildung der Stellgröße berücksichtigt, so daß auf Wanddickenschwankungen über die Breite beziehungsweise den Umfang des Langproduktes, die an der Düse ausregelbar sind, schnell und mit höherer Präzision reagiert werden kann. Zwar ist es auch bekannt, zur Messung der Wanddicke über den Umfang beziehungsweise die Breite des Langproduktes verteilt mehrere Ultraschallmeßköpfe stationär anzuordnen, doch läßt sich damit kein lückenloses Bild der Wanddicke über den gesamten Umfang beziehungsweise die ganze Breite erhalten, weil es aus praktischen oder räumlichen Gründen nicht möglich ist, sie ganz dicht anzuordnen. Aber selbst wenn das möglich wäre, erhielte man damit immer noch keine vergleichbar gute Regelgröße, die von Dickenveränderungen in Längsrichtung frei ist.

Vorzugsweise nimmt die Auswerteeinheit bei in unmittelbarer räumlicher Nähe befindlichen Meßköpfen eine Abstimmung ihrer Meßwerte vor. Da in dieser Position der Meßköpfe von den Meßköpfen das Langprodukt praktisch an derselben Stelle gemessen wird, müssen die Meßwerte gleich sein.

Im folgenden wird die Erfindung anhand einer Zeichnung näher erläutert, die eine Regeleinrichtung für die thermische Einstellung der Düse an einem Extruder für ein Rohr zeigt.

Aus der Düse 1 eines Extruders tritt ein Rohr 2 aus thermoplastischem Material aus, das sowohl in Längsrichtung als auch in Umfangsrichtung in der Wandstärke unterschiedlich ist. Zur besseren Darstellung sind diese Schwankungen in der Wandstärke übertrieben gezeichnet. Die Düse 1 weist nicht dargestellte, über den Umfang verteilte Heizelemente auf, mit den segmentweise das thermoplastische Material in der Düse aufheizbar ist, um dessen Fließfähigkeit und damit auch die Wandstärke des Rohres 2 über dessen Umfang beeinflussen zu können. Diese Heizelemente bilden die Stellglieder der Regelstrecke einer Regeleinrichtung.

Die Regeleinrichtung umfaßt neben den nicht dargestellten Stellgliedern eine Meßeinrichtung mit zwei Ultraschallmeßköpfen 3,4 und einer Auswerteeinheit 5, ein Vergleichsglied 6 und einen Regler 7. Von den beiden Ultraschallmeßköpfen 3,4 ist der Ultraschallmeßkopf 3 stationär angeordnet, während der Ultraschallmeßkopf 4 in einem Gestell 8 umlaufend angeordnet ist. Die Meßwerte der beiden Ultraschallmeßköpfe 3,4 werden an die Auswerteeinheit 5 geliefert.

Die Funktion der erfindungsgemäßen Regeleinrichtung ist folgende:
Das extrudierte Rohr 2 weist in Längsrichtung und in Umfangsrichtung in einzelnen Querschnittsebenen eine unterschiedliche Wanddicke auf. In den Querschnittsebenen A und B ist jeweils die Wanddicke über den gesamten Umfang gleich. In der Ebene B ist sie größer als in der Ebene A. Diese Wanddickenschwankung ist charakteristisch für Änderungen in der Abzugsgeschwindigkeit und/oder Änderungen in der Temperatur des Materials und/oder Änderungen in der Schneckendrehzahl. Die Regeleinrichtung wirkt nicht auf diese Wanddickenschwankungen ein.

In den Querschnittsebenen C und D dagegen sind die Wanddicken an diametral gegenüberliegenden Stellen verschieden. Der Dickenunterschied au in Längsrichtung fluchtenden Stellen in den Ebenen C und D ist aber gleich dem in den Ebenen A und B. Diese Dickenunterschiede in Längsrichtung gilt es für die Stellgröße zu eliminieren. Zu diesem Zweck werden die Meßgrößen der Ultraschallmeßköpfe 3,4 in der Auswerteeinheit 5 miteinander verknüpft.

Jedesmal wenn sich der Meßkopf 4 in unmittelbarer Nähe des Meßkopfes 3 befindet und dann die Wanddicke an dem praktisch gleichen Ort mißt, findet in der Auswerteeinheit 5 ein Abgleich statt, weil für diesen Ort die Meßwerte gleich sein müssen.

Wenn der Meßort dann in Richtung der Querschnittsebene B sich verlagert, liefern die Meßköpfe 3,4 weiter gleich große Meßwerte, weil in dem Bereich zwischen den Querschnittsebenen A und B in jeder Querschnittsebene die Wanddicke über den gesamten Umfang gleich ist. Das bedeutet, daß die Auswerteeinheit 5 ein Ausgangssignal liefert, das gleich der dem Vergleichsglied 6 zugeführten Führungsgröße ist. Das hat wiederum zur Folge, daß der Regler 7 kein Stellsignal liefert, das zu einer Verstellung der Einstellung der Düse 1 führt.

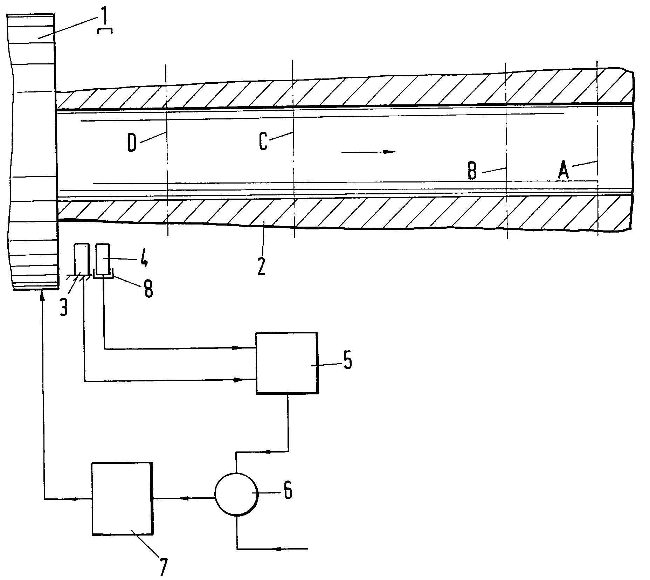

Diese Verhältnisse ändern sich erst, wenn sich die Meßebene der Ebene C nähert. In dieser Ebene C ist nämlich die Wanddicke über den Umfang gesehen unterschiedlich. Dies gilt bis zur Ebene D. Wie ein Vergleich der Wanddicken an fluchtenden Orten der Ebenen C und D zeigt, ist die auf Schwankungen in Längsrichtung zurückzuführende Wanddickenänderung gleich derjenigen zwischen den Ebenen A und B. In den Ebenen C und D sind deshalb die Wanddickenunterschiede nicht auf Schwankungen in Längsrichtung, sondern auf Schwankungen in Umfangsrichtung zurückzuführen, die durch Eingriffe an der Düse 1 ausgeregelt werden können. Für die Ebene C verknüpft die Auswerteeinheit 5 die verschiedenen Meßwerte der Meßköpfe 3,4 derart miteinander, daß der aus Wanddickenschwankungen in Längsrichtung resultierende Anteil eliminiert wird. In dem Vergleichsglied 6 wird eine Regeldifferenz festgestellt, die den Regler 7 veranlaßt, eine Stellgröße an die thermischen Einstellglieder der Düse 1 im Sinne einer Vergrößerung der Wanddicke im in der Zeichnung dargestellten unteren Bereich zu liefern. Nach der Zeichnung hat sich dieser Stellvorgang bis zur Ebene D allerdings noch nicht ausgewirkt.

## Patentansprüche

1. Regeleinrichtung für die mechanische oder thermische Einstellung der Düse (1) eines Extruders für Langprodukte (2) mit einer Wanddickenmeßeinrichtung (3,4,5) mit mindestens einem über die Breite beziehungsweise über den Umfang des Langproduktes (2) reversierenden beziehungsweise umlaufenden Ultraschallmeßkopf (4), aus dessen Meßwert die Regelgröße abgeleitet wird,
**gekennzeichnet durch** mindestens einen weiteren, stationären Ultraschallmeßkopf (3), der seinen Meßwert an eine Auswerteeinheit (5) liefert, die diesen Meßwert mit dem Meßwert des reversierenden beziehungsweise umlaufenden Ultraschallmeßkopfes (4) derart verknüpft, daß die Auswerteeinheit (5) ein von überlagerten Meßwerten des stationären Ultraschallmeßkopfes (3) für ausschließliche Wanddickenschwankungen in Längsrichtung des Langproduktes (2) freies Signal für die Regelung der Wanddicke in Umfangsrichtung bildet.

2. Regeleinrichtung nach Anspruch 1,
**dadurch gekennzeichnet,** daß die Auswerteeinheit (5) bei in unmittelbarer räumlicher Nähe befindlichen Ultraschallmeßköpfen (3,4) eine Abstimmung ihrer Meßwerte vornimmt.

3. Regeleinrichtung nach Anspruch 1 oder 2,
**dadurch gekennzeichnet,** daß der Meßwert des stationären Ultraschallmeßkopfes (3) zur Regelung von Wanddickenschwankungen in Längsrichtung verwendet wird.

## Claims

1. A control device for the mechanical or thermal adjustment of the nozzle (1) of an extruder for elongate products (2), having a wall thickness measuring device (3,4,5) having at least one ultrasonic measuring head which reverses over the width of the elongate product (2) or rotates around the periphery thereof and from whose measured value the controlled quantity is derived, characterized by at least one further stationary ultrasonic measuring head (3) delivering its measured value to an evaluating unit (5) which so links said measured value with the measured value of the reversing or rotating ultrasonic measuring head (4) that the evaluating unit (5) forms for the control of the wall thickness in the peripheral direction a signal which is free from superposed measured values of the stationary ultrasonic measuring head (3) for exclusive wall thickness fluctuations in the longitudinal direction of the elongate product (2).

2. A control device according to claim 1, characterized in that with the ultrasonic measuring heads (3,4) located in immediate spatial proximity, the evaluating unit (5) performs a harmonization of their measured values.

3. A control device according to the claims 1 or 2, characterized in that the measured value of the stationary ultrasonic measuring head (3) is used for controlling wall thickness fluctuations in the longitudinal direction.

## Revendications

1. Dispositif de commande pour l'ajustement mécanique ou thermique de la buse (1) d'une extrudeuse pour des produits allongés (2), comportant un dispositif (3, 4, 5) de mesure de l'épaisseur de paroi, lequel comprend au moins une tête de mesure ultrasonique qui inverse son déplacement sur l'étendue en largeur du produit allongé (2) ou qui tourne autour de sa périphérie, la grandeur contrôlée étant dérivée de la valeur mesurée par cette tête de mesure, caractérisée par au moins une autre tête de mesure ultrasonique fixe (3) délivrant sa valeur mesurée à une unité d'évaluation (5) qui associe ladite valeur mesurée à la valeur mesurée de la tête de mesure ultrasonique (4) qui inverse son déplacement ou qui tourne, de manière telle que l'unité d'évaluation (5) forme, pour la commande de l'épaisseur de paroi dans la direction périphérique, un signal qui est exempt de valeurs mesurées superposées de la tête fixe de mesure ultrasonique (3) pour des fluctuations exclusives de l'épaisseur de paroi dans la direction longitudinale du produit allongé (2).

2. Dispositif de commande selon la revendication 1, caractérisé en ce que les têtes de mesure ultra-soniques (3, 4) étant situées à proximité directe l'une de l'autre dans l'espace, l'unité d'évaluation (5) exécute une harmonisation de leurs valeurs mesurées.

3. Dispositif de commande selon les revendications 1 ou 2, caractérisé en ce que la valeur mesurée de la tête fixe de mesure ultrasonique (3) est utilisée pour le contrôle de fluctuations de l'épaisseur de paroi dans la direction longitudinale.
